# EUROPEAN PATENT APPLICATION

(11) **EP 2 362 301 A2**
(43) Date of publication of application: **31.08.2011**
(21) Application number: 11154860.8
(22) Date of filing: 17.02.2011
(51) Int. Cl.: G06F 3/043, G06F 3/044

(54) **Touch screen system with acoustic and capacitive sensing**

(30) Priority: 18.02.2010 US 305695 P; 29.12.2010 US 980810
(71) Applicant: Flextronics AP, LLC, Broomfield, CO 80021 (US)
(72) Inventor: Long, Ding Hua, Shenzhen (CN)
(74) Representative: Albutt, Anthony John

(57) **Abstract**

A touch screen system that can sense when an object is held in continuous direct or indirect contact with a transparent substrate of the touch screen system as well as determine a location (e.g., X, Y coordinates) of the object in relation to the transparent substrate. The touch screen system employs dynamic surface capacitance technology to sense whether the object is held in contact with the transparent substrate and acoustic sensing technology to determine a position of the object that is contacting the transparent substrate.

## Description

### CROSS-REFER-ENCE TO LATED APPLICATION

This application claims priority under 35 U.S.C. § 119 to U.S. Provisional Application No. 61/305,695, entitled "TOUCH SCREEN SYSTEM WITH ACOUSTIC AND CAPACITIVE SENSING," filed on February 18, 2010, the contents of which are incorporated herein as if set forth in full.

### BACKGROUND

A variety of electronic devices employ touch screens or touch panels to detect the presence and location of a touch within a display area of the electronic device, generally by a finger, hand, or other conductive object. Such electronic devices include mobile phones, internet devices, portable game consoles, portable readers, music players, navigation devices, appliances, automation and control electronics, laptop computers, television screens, and the like. Touch screens allow for direct interaction with what is displayed on the screen where it is displayed, rather than indirect interaction through a mouse or separate touch pad. Touch screens also enable such interaction without requiring any intermediate devices, such as a stylus that must be held in a user's hand.

There are a number of touch screen technologies, and from among these various technologies, acoustic touch screen technology has emerged as a durable and accurate technology that functions even when the screen itself is dirty or scratched. Acoustic touch screen technology involves using acoustic transducers to convert the mechanical or acoustic energy generated by a physical contact with the touch screen into an electronic signal. Hardware and software that is operatively connected to the transducers then analyzes the electronic signal to determine the location of the contact. Because no acoustic energy is generated when the finger or other conductive object lies motionless against the screen, acoustic sensing technology is unable to detect when a finger is held against the screen after an initial contact.

One proposed solution to this problem includes assembling a number of capacitors along one or more borders of the touch screen. Each capacitor includes two electrodes that are separated by an air gap. Touching the surface of the screen with an object such as a finger causes the electrodes to move towards one another, thereby reducing the air gap and causing a measureable capacitance variation that can be converted into a binary signal representing a "hold" or "release" action in relation to a contact with the touch screen. While this approach allows the touch screen system to sense when an object is in continuous contact with the screen, it has many shortcomings. First, several capacitors must be assembled into each touch screen system or unit, requiring a number of manual processes that introduce variation into the system. Second, the capacitors must be connected in series, which results in a complicated mechanical structure. In addition, the air gap between the electrodes of each capacitor is sensitive to environmental conditions and susceptible to infiltration by airborne particles. Further, a user must continually apply a pressure that is sufficient to hold the electrodes closer towards one another than their resting positions in order to achieve accurate sensing. These limitations introduce sensing errors and degrade the reliability of the touch panel system.

It is against this background that the teachings herein have been developed.

### SUMMARY

Disclosed herein is a touch screen system for an electronic device having a power source that provides a first voltage. The touch screen system includes a transparent substrate for receiving a contact of an object; one or more acoustic transducers associated with the transparent substrate, wherein the acoustic transducers receive an acoustic wave generated by the contact and convert the acoustic wave to an electronic signal; and a transparent conductive layer located below the transparent substrate, wherein the transparent conductive layer receives the first voltage from the power source, and wherein the contact of the object causes a capacitive change between the transparent conductive layer and the obj ect.

The touch screen system may further include a processor for monitoring the electronic signal and the capacitive change. In this regard, the processor may analyze the electronic signal to determine a location of the object upon the transparent substrate and may monitor the capacitive change to determine whether the object is continuously in contact with the transparent substrate.

In addition, the touch screen system may include a memory for storing signal signatures representing a number of known locations relative to the transparent substrate, wherein the processor compares the electronic signal from the acoustic transducers to the stored signal signatures to determine the location of the object upon the transparent substrate. Moreover, an anti-glare coating may overlay the transparent substrate.

The object may be a finger, and the acoustic transducers may be piezoelectric transducers. The transparent conductive layer may be an indium tin oxide (ITO) layer. The contact of the object with the transparent substrate may be an indirect contact.

Also disclosed is a method for determining a presence and a location of an object in relation to a transparent substrate of an electronic device having a power source that provides a stimulus signal. The method includes receiving, at one or more acoustic sensors associated with the transparent substrate, an acoustic signal, wherein the acoustic signal is generated by a touch of the object in relation to a first side of the transparent substrate; converting, by the acoustic sensors, the acoustic signal to an electronic signal; receiving the stimulus signal at a transparent conductive layer associated with a second side of the transparent substrate, wherein the touch of the object in relation to the first side of the transparent substrate causes a capacitive change between the transparent conductive layer and the object; analyzing, by a microcontroller, the capacitive change to determine whether the object is in contact with the transparent substrate; and analyzing, by the microcontroller, the electronic signal to determine a location of the object relative to the transparent substrate.

The object may be a finger, and the contact of the object with the transparent substrate may be a continuous contact. Additionally or alternatively, the contact may be an indirect contact. The acoustic transducers may be piezoelectric transducers. The transparent conductive layer may be an indium tin oxide (ITO) layer.

In one implementation, analyzing the electronic signal may comprise comparing the electronic signal to stored signal signatures representing a number of known locations relative to the transparent substrate and identifying, from among the stored signal signatures, a matching signal signature that corresponds to the electronic signal. In another implementation, analyzing the electronic signal may comprise comparing the electronic signal to stored signal signatures representing a number of known locations relative to the transparent substrate; identifying, from among the stored signal signatures, one or more reference signatures, wherein the reference signatures most closely correspond to the electronic signal; and referring to the reference signatures, operating the microcontroller to extrapolate the location of the object relative to the transparent substrate.

Also disclosed is a method for determining a presence and a location of an object in relation to a transparent substrate of an electronic device. The method includes using one or more acoustic sensors associated with the transparent substrate, detecting an acoustic signal generated by a touch of the object in relation to a first side of the transparent substrate; and using one or more capacitive sensors associated with a transparent conductive layer abutting a second side of the transparent substrate, detecting a capacitive change generated when the object contacts the transparent substrate.

The method may further include converting the capacitive change to a voltage output; converting the acoustic signal to an electronic signal; using a microcontroller, analyzing the voltage output to determine whether the object is in continuous contact with the transparent substrate; and using the microcontroller, analyzing the electronic signal to determine a location of the object relative to the transparent substrate.

The object may be a finger, and the continuous contact may be an indirect contact.

### BRIEF DESCRIPTION OF THE DRAWINGS

Figure 1 shows an exploded view of one embodiment of a touch screen system including a touch screen stack that is operatively connected to a printed circuit board.

Figure 2 shows a front view of the touch screen system of Figure 1, where the touch screen stack of Figure 1 is positioned above a display.

Figure 3 shows a top view of select elements of the touch screen system of Figure 1.

Figure 4 shows a functional diagram of the printed circuit board of Figure 1.

Figure 5 shows a functional diagram of a display area of a touch screen of the touch screen system of Figure 1 as correlated with several acoustic signatures that correspond to exemplary points of impact upon the touch screen.

### DETAILED DESCRIPTION

While the embodiments of the invention are susceptible to various modifications and alternative forms, specific embodiments thereof have been shown by way of example in the drawings and are herein described in detail. It should be understood, however, that it is not intended to limit the invention to the particular form disclosed, but rather, the invention is to cover all modifications, equivalents, and alternatives of embodiments of the invention as defined by the claims.

As discussed above, acoustic touch screen technology excels in detecting a location at which an object contacts a touch screen substrate (hereinafter "position sensing") but is generally unable to sense whether the object remains in continuous contact with the substrate, or whether the object is being held against the substrate (hereinafter "hold-and-release sensing"). To remedy this problem, dynamic surface capacitance technology has been combined with acoustic sensing technology to create a touch screen system that achieves both effective hold-and-release sensing and position sensing in an elegant design that may be manufactured according to a simplified manufacturing process.

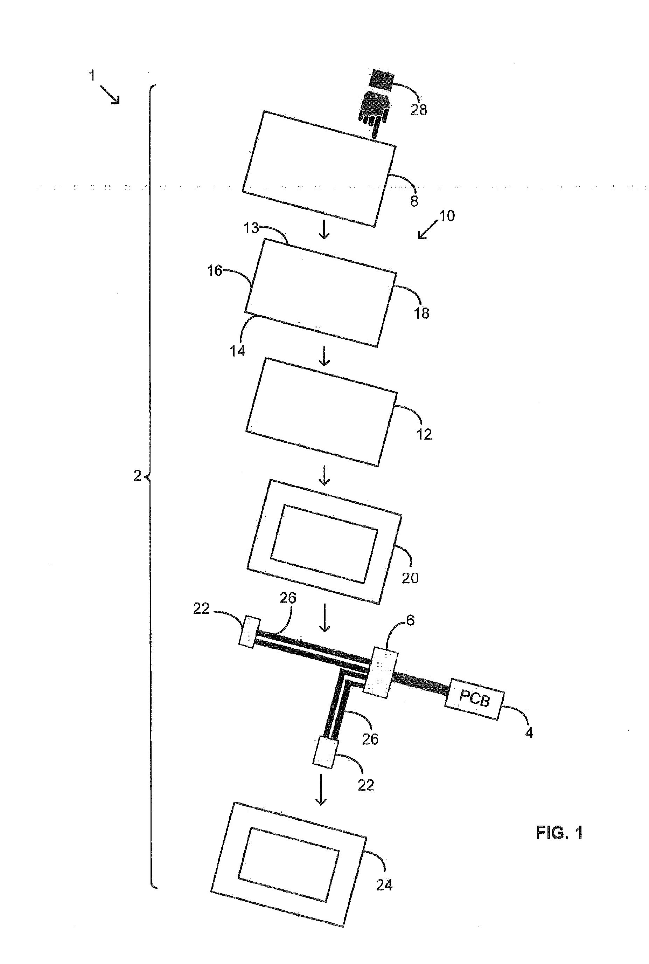

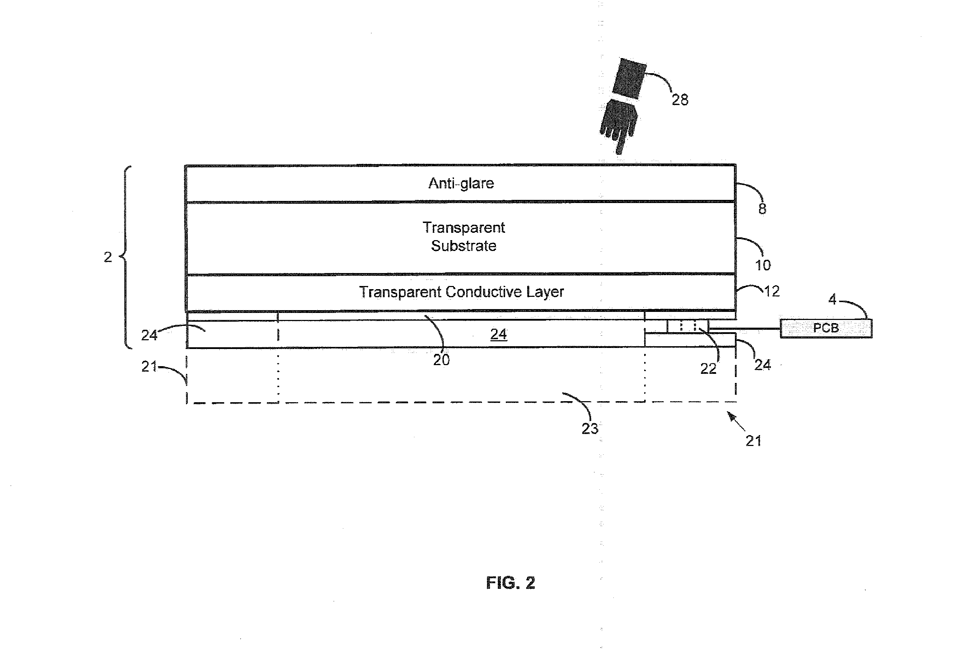

Figures 1 and 2 show respective exploded and front views of one embodiment of a touch screen system 1. The touch screen system 1 includes a touch screen stack 2 that is electrically interconnected to a printed circuit board (PCB) 4 having various electronic components that will be described in detail below. The touch screen stack 2 and the PCB 4 may be interconnected via a connector 6, which may be any appropriate electrical interface such as, for example, a flexible printed circuit (FPC).

The touch screen stack 2 may be positioned above a display 21, as shown in Figure 2. The display 21 may be any of several types of displays, including DLP^{®} displays, LCOS displays, other LC display types and/or brands, OLED displays, or any other suitable display types. The display 21 may have an active display area 23 with which a user may wish to interact. Thus, because the display 21 lies below the touch screen stack 2, any portions of the touch screen stack 2 that directly overlay the active display area 23 of the display 21 are preferably transparent so as to allow a user to see through the stack 2 to the active display area 23.

Turning to the touch screen stack 2, one embodiment includes several layered elements that contribute to one or both of the position sensing and the hold-and-release sensing aspects of the touch screen system 1. Each element of an embodiment of the touch screen stack 2 will be described briefly before its functionality is detailed below. From the top down, the touch screen stack 2 includes an anti-glare coating 8 over a transparent substrate 10 having top, bottom, left, and right edges 13, 14, 16, 18, respectively. The transparent substrate 10 may be formed of any appropriate transparent material including, for example, glass or plastic.

The touch screen stack 2 also includes a transparent conductive layer 12 that, in one embodiment, may be located just below the transparent substrate 10. The transparent conductive layer 12 may be an indium tin oxide (ITO) layer or it may be formed of any other appropriate conductive material such as a conductive polymer.

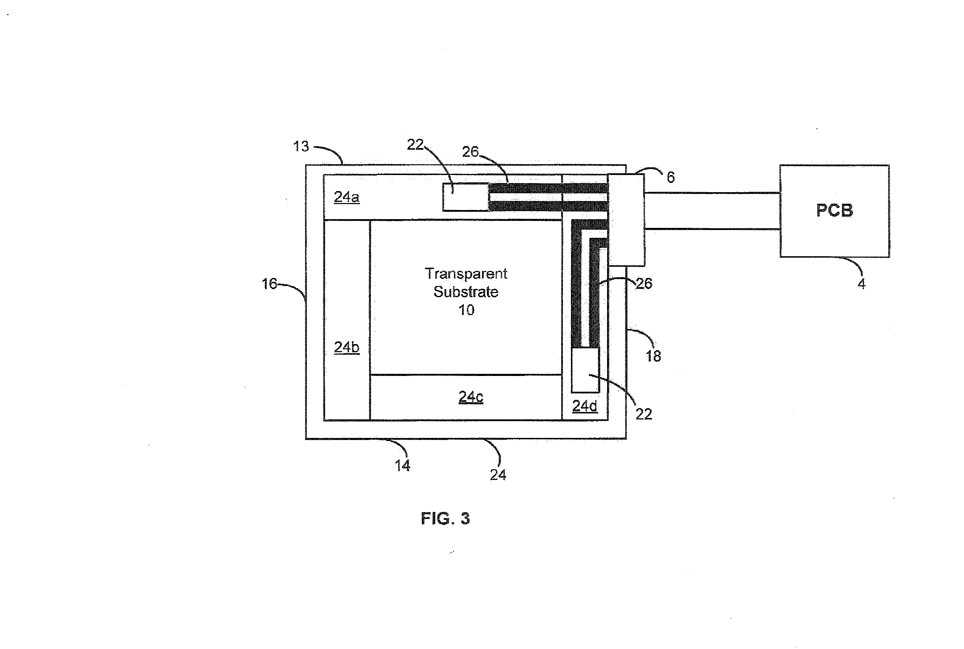

An insulator 20 (e.g., an insulating tape) lies between the transparent conductive layer 12 and one or more acoustic transducers 22 positioned along one or more edges of the transparent substrate 10. The insulator 20 is an annular structure that does not interfere with or block the active display area 23 of the display 21 when the touch screen stack 2 is assembled. For clarity, Figure 3 shows a top view of select layers of the touch screen stack 2 and illustrates the acoustic transducers 22 as positioned relative to the top and right edges 13, 18 of the transparent substrate 10 when the touch screen stack 2 is assembled. In this embodiment, acoustic transducers are not present along the bottom and left edges 14, 16 of the transparent substrate 10.

Conductive traces 26 (Figures 1 and 3) connect the acoustic transducers 22 with the connector 6. The conductive traces 26 may be any appropriate type of conductive traces including, for example, silver traces. A spacer 24 lies at the bottom of the stack 2. Like the insulator 20, the spacer 24 is an annular structure that does not interfere with the active display area 23 of the display 21. The spacer 24 may be any appropriate material such as a flexible gasket material or a firm adhesive, and the spacer 24 may account for any dimensional irregularities in the elements of the stack 2. For example, in the embodiment shown in Figures 1-3, the conductive traces 26 and acoustic transducers 22 may have thicknesses of 10 to 20 microns and .3 to .5 mm, respectively. Depending on the thickness of the transparent substrate 10, the spacer may have a thickness between 1 and 3 millimeters such that once the touch screen stack 2 is assembled upon the display 21, the spacer 24 may compress up to 30 percent so as to account for dimensional irregularities created by the presence of the acoustic transducers 22 and/or the conductive traces 26 along some, but not all, of the edges 13, 14, 16, 18 of the transparent substrate 10. The spacer 24 may also have a variable thickness, and one way to accomplish this variable thickness would be to construct the spacer 24 from four separate legs 24a-d, as shown in Figure 3.

Turning to the functionality of the touch screen system 1, the system may determine a location associated with a physical contact of an object 28 (e.g., a finger) with a top of the touch screen stack 2. Specifically, when the object 28 contacts the top of the touch screen stack 2, the impact generates an acoustic or bending (i.e., mechanical) wave or signal that propagates through the anti-glare coating 8, the transparent substrate 10, the transparent conductive layer 12, and the insulator 20 to be received at the acoustic transducers 22. The acoustic transducers 22 may be piezoelectric crystals or any other acoustic transducers of any appropriate, size, shape, type, and/or configuration. While in this embodiment, the acoustic transducers 22 are aligned with the top and right edges 13, 18 of the transparent substrate 10, as discussed above, the acoustic transducers 22 may be placed at any appropriate position(s) relative to the transparent substrate 10.

Upon receiving the acoustic wave, the acoustic transducers 22 convert the acoustic wave to an analog electronic signal, which is transmitted from the acoustic transducers 22 to the PCB 4 for processing. In this regard, the electronic signal may be transmitted along the conductive traces 26 to the PCB 4 via the connector 6.

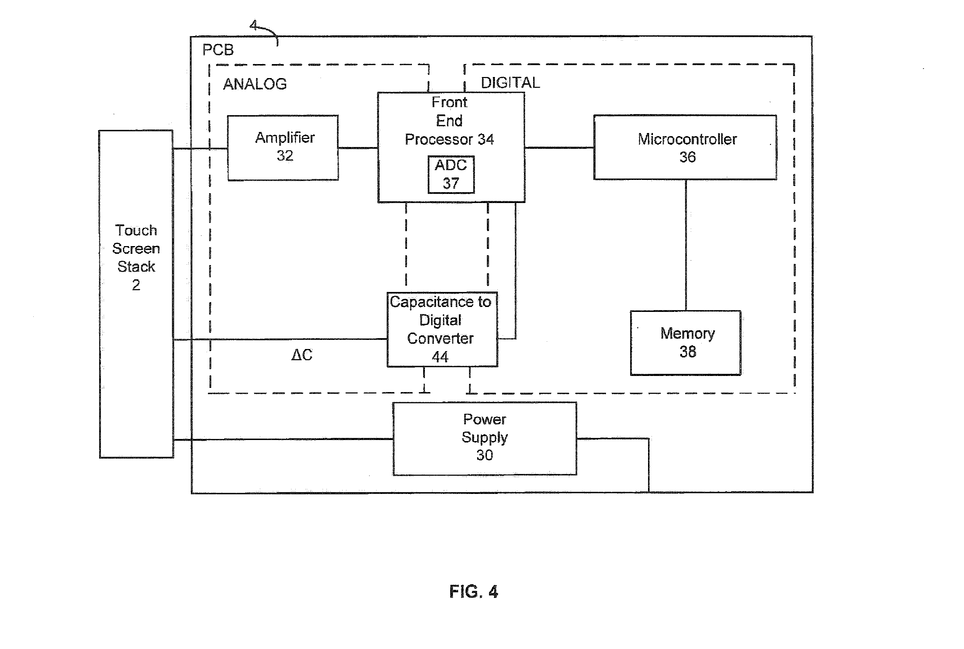

Figure 4 shows a functional block diagram of one embodiment of the PCB 4. In this embodiment, the PCB 4 includes a power supply 30 that receives power from an external power source (not shown) such as, for example, a battery. The power supply 30 is coupled with each component on the PCB 4 to provide the desired form of voltage to each component. For ease of illustration, these connections are not shown. The PCB 4 includes a number of additional components for carrying out the control and processing functionality of the touch screen system 1, discussed below, and any appropriate variation of these individual components and/or the configuration of the components is contemplated.

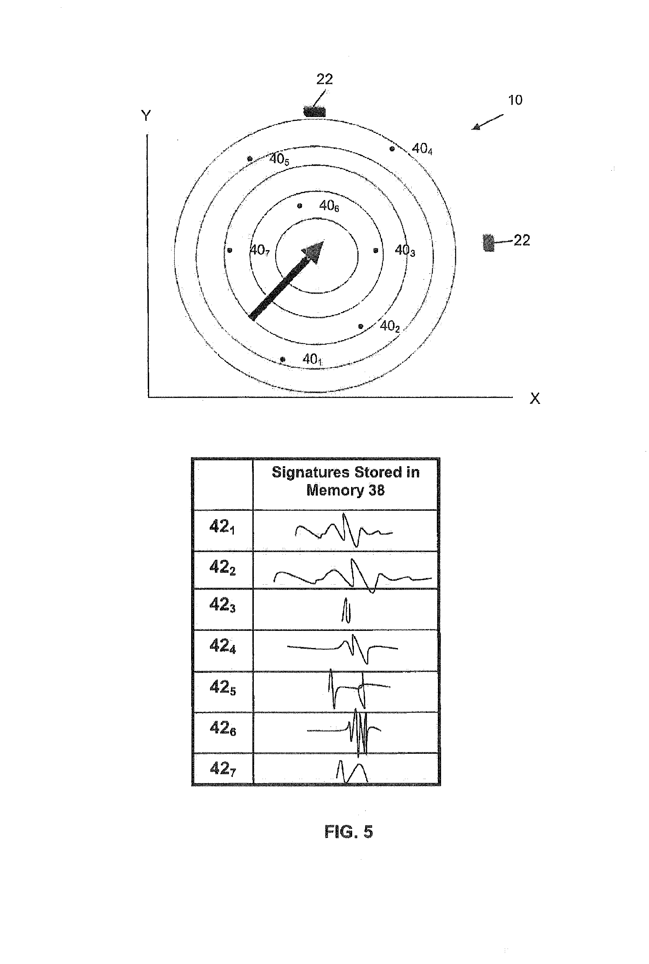

Once the electronic signal is received from the acoustic transducers 22, the signal may be amplified at an amplifier 32 on the PCB 4. Alternatively, the acoustic transducers 22 may amplify the signal before transmitting it to the PCB 4. The amplified signal is passed to a front end processor 34, which may include an analog-to-digital converter (A/D converter) 37. The A/D converter 37 digitizes the amplified signal and transmits the digitized data to a microcontroller 36, which processes the digitized data to determine a location (i.e., X, Y coordinates) of the object 28 relative to the transparent substrate 10. To make this positional determination, the microcontroller 36 accesses a memory 38 and compares the digitized data received from the acoustic sensors 22 with data stored at the memory 38. The stored data represents a number of unique waves, or signatures, that are generated from impacts at known locations relative to the transparent substrate 10 during the manufacturing process. For example, Figure 5 shows a number of known impact points 40₁₋₇ relative to the transparent substrate 10. Contacting the touch screen stack 2 at each of the impact points 40₁₋₇ produces a number of corresponding wave signatures 42₁₋₇. The signatures 42₁₋₇ and their corresponding X, Y locations 40₁₋₇ are stored in the memory 38 for use by the microcontroller, 36 in determining where the object 28 is contacting the top of the touch screen stack 2 during use of the touch screen system 1. While Figure 5 shows signatures that correlate with only seven impact points, any appropriate number of signatures may be stored in the memory 38 (e.g., 1000 points, 4000 points, etc.). Further, if a signature correlating to the impact point is not included in the stored data, the microcontroller 36 may execute an algorithm to extrapolate and/or interpolate the location based on the closest impact point that is included in the stored data. Based on this comparison and/or calculation, the microcontroller 36 outputs the X, Y coordinates of the impact point for use in controlling the electronic device as desired by the user.

Because a contact or impact is necessary to create an acoustic wave that may be analyzed as discussed above, the touch screen system 1 also includes dynamic surface capacitance technology to determine when the object 28 is held in continuous contact with the top of the touch screen stack 2 after an initial contact. In one embodiment, shown in Figures 1 and 4, the power supply 30 may apply an analog voltage (which alternatively may be referred to as a stimulus signal) to the surface of the transparent conductive layer 12, resulting in a uniform electrostatic field. As a result, when the conductive object 28 (e.g., a finger) contacts the top of the touch screen stack 2, there is a measureable capacitance change between the object 28 and the transparent conductive layer 12. In this regard, even though the power supply 30 applies a constant stimulus signal to maintain a constant voltage on the transparent conductive layer 12, the voltage may be temporarily overridden when the object 28 contacts the top of the touch screen stack 2, producing a capacitance change (and thus a voltage change), ΔC, on the transparent conductive layer 12. Alternatively, in recognizing that capacitors generally hold charge unless/until charge is bled away, the power source 30 may apply the stimulus signal on a periodic basis and in a manner that is adequate to maintain a consistent voltage on the conductive layer 12 when the object 28 is not in contact with the touch screen stack 2.

The capacitance change, ΔC, that results when the object 28 comes into contact with the top of the touch screen stack 2 may register on a capacitance-to-digital converter (CDC) 44 on the PCB 4, where the ΔC may be converted to a discrete voltage level. The CDC 44 may be any appropriate CDC, and one suitable example includes the AD7150 capacitance converter from Analog Devices, Inc. The discrete voltage level output from the CDC 44 may correlate with whether or not the object 28 is in contact with the top of the touch screen stack 2. Further, the discrete voltage level may be routed through the A/D converter 37 of the front end processor 34 for further processing before it is sent to the microcontroller 36, which may, in turn, execute logic that determines whether the object 28 is in contact with the touch screen stack 2 based on the discrete voltage level. For example, the microprocessor 36 may be programmed to determine that the object 28 is contacting the stack 2 when the discrete voltage level is at or below a predefined voltage V_{touch} (e.g., 3.3 V) and that the object 28 has been removed from the stack 2 when the discrete voltage level is above the predefined voltage V_{touch}.

Alternatively, the ΔC may register on a resistor-capacitor circuit (RC circuit) (not shown) on the PCB 4, thereby altering the charge/discharge time, or oscillation frequency, of the RC circuit. The voltage output from the RC circuit may be passed to the A/D converter 37, which monitors the change in output voltage versus time in order to track the oscillation frequency of the RC circuit. The microcontroller 36 may then use the output from the A/D converter 37 to recognize a hold and release action, or whether the object 28 is in contact with the stack 2.

Using this dynamic surface capacitance technology in combination with the acoustic sensing technology described above allows the touch screen system 1 to not only determine the location of an object that contacts the touch screen stack 2 but also whether the object is held against the stack 2 for a period of time. This is accomplished without the need to construct a number of capacitors within the touch screen system 1, which introduces time, complexity, and additional expense into the manufacturing process as well as inaccuracy and unreliability into the hold-and-release sensing mechanism of the system.

While the embodiments of the invention have been illustrated and described in detail in the drawings and foregoing description, such illustration and description is to be considered as examples and not restrictive in character. For example, certain embodiments described hereinabove may be combinable with other described embodiments and/or arranged in other ways (e.g., process elements may be performed in other sequences). Accordingly, it should be understood that only example embodiments and variants thereof have been shown and described.

## Claims

1. A touch screen system for an electronic device having a power source that provides a first voltage, comprising:
a transparent substrate for receiving a contact of an object;
one or more acoustic transducers associated with the transparent substrate, wherein the acoustic transducers receive an acoustic wave generated by the contact and convert the acoustic wave to an electronic signal; and
a transparent conductive layer located below the transparent substrate, wherein the transparent conductive layer receives the first voltage from the power source, and wherein the contact of the object causes a capacitive change between the transparent conductive layer and the object.

2. A touch screen system as defined in claim 1, further including a processor for monitoring the electronic signal and the capacitive change, wherein the processor analyzes the electronic signal to determine a location of the object upon the transparent substrate and the capacitive change to determine whether the object is continuously in contact with the transparent substrate.

3. A touch screen system as defined in claim 1, further including a memory for storing signal signatures representing a number of known locations relative to the transparent substrate, wherein the processor compares the electronic signal from the acoustic transducers to the stored signal signatures to determine the location of the object upon the transparent substrate.

4. A touch screen system as defined in claim 1, wherein the object is a finger.

5. A touch screen system as defined in claim 1, wherein the acoustic transducers are piezoelectric transducers.

6. A touch screen system as defined in claim 1, wherein the transparent conductive layer is an indium tin oxide (ITO) layer.

7. A touch screen system as defined in claim 1, further including an anti-glare coating overlaying the transparent substrate.

8. A touch screen system as defined in claim 7, wherein the contact is an indirect contact with the transparent substrate.

9. A method for determining a presence and a location of an object in relation to a transparent substrate of an electronic device having a power source that provides a stimulus signal, the method comprising:
receiving, at one or more acoustic sensors associated with the transparent substrate, an acoustic signal, wherein the acoustic signal is generated by a touch of the object in relation to a first side of the transparent substrate;
converting, by the acoustic sensors, the acoustic signal to an electronic signal;
receiving the stimulus signal at a transparent conductive layer associated with a second side of the transparent substrate, wherein the touch of the object in relation to the first side of the transparent substrate causes a capacitive change between the transparent conductive layer and the object;
analyzing, by a microcontroller, the capacitive change to determine whether the object is in contact with the transparent substrate; and
analyzing, by the microcontroller, the electronic signal to determine a location of the object relative to the transparent substrate.

10. A method as defined in claim 9, wherein the contact is a continuous contact.

11. A method as defined in claim 9, wherein the contact is an indirect contact.

12. A method as defined in claim 9, wherein the analyzing the electronic signal comprises:
comparing the electronic signal to stored signal signatures representing a number of known locations relative to the transparent substrate; and
identifying, from among the stored signal signatures, a matching signal signature that corresponds to the electronic signal.

13. A method as defined in claim 9, wherein the analyzing the electronic signal comprises:
comparing the electronic signal to stored signal signatures representing a number of known locations relative to the transparent substrate;
identifying, from among the stored signal signatures, one or more reference signatures, wherein the reference signatures most closely correspond to the electronic signal; and
referring to the reference signatures, operating the microcontroller to extrapolate the location of the object relative to the transparent substrate.

14. A method as defined in claim 9, wherein the object is a finger.

15. A method as defined in claim 9, wherein the acoustic transducers are piezoelectric transducers.

16. A touch screen system as defined in claim 9, wherein the transparent conductive layer is an indium tin oxide (ITO) layer.

17. A method for determining a presence and a location of an object in relation to a transparent substrate of an electronic device, the method comprising:
using one or more acoustic sensors associated with the transparent substrate, detecting an acoustic signal generated by a touch of the object in relation to a first side of the transparent substrate; and
using one or more capacitive sensors associated with a transparent conductive layer abutting a second side of the transparent substrate, detecting a capacitive change generated when the object contacts the transparent substrate.

18. A method as defined in claim 17, further comprising:
converting the capacitive change to a voltage output;
converting the acoustic signal to an electronic signal;
using a microcontroller, analyzing the voltage output to determine whether the object is in continuous contact with the transparent substrate; and
using the microcontroller, analyzing the electronic signal to determine a location of the object relative to the transparent substrate.

19. A method as defined in claim 18, wherein said continuous contact is an indirect contact.

20. A method as defined in claim 17, wherein the object is a finger.
